# EUROPÄISCHE PATENTSCHRIFT

(11) **EP 1 386 817 B1**
(45) Veröffentlichungstag und Bekanntmachung des Hinweises auf die Patenterteilung: **30.07.2008**
(21) Anmeldenummer: 03015137.7
(22) Anmeldetag: 04.07.2003
(51) Int. Cl.: B61D 23/02, B60R 3/02

(54) **Verfahren zur Steuerung eines Schiebetritts und Schiebetritt**
Extendable footstep and method for actuating said extendable footstep
Marchepied déployable et procédé pour actionner ledit marchepied

(30) Priorität: 31.07.2002 DE 10235874; 20.09.2002 DE 10245014
(43) Veröffentlichungstag der Anmeldung: 04.02.2004
(73) Patentinhaber: Pintsch Bamag Antriebs- und Verkehrstechnik GmbH, 46537 Dinslaken (DE)
(72) Erfinder: Schulte, Andreas, Dipl.-Ing., 46399 Bocholt (DE); Stahl, Andreas, 46562 Voerde (DE); Wieskotten, Norbert, Dipl.-Ing., 45133 Essen (DE)
(74) Vertreter: Patentanwälte Ruff, Wilhelm, Beier, Dauster & Partner

(56) Entgegenhaltungen:
- FR-A- 2 229 595
- FR-A- 2 297 758
- GB-A- 2 303 350
- US-A- 4 110 673
- US-B1- 6 325 397
- PATENT ABSTRACTS OF JAPAN vol. 009, no. 313 (M-437), 10. Dezember 1985 (1985-12-10) & JP 60 148741 A (NITSUSAN SHIYATAI KK), 6. August 1985 (1985-08-06)

## Beschreibung

Die Erfindung betrifft ein Verfahren zur Steuerung eines Schiebetritts, insbesondere für Schienenfahrzeuge, mit einem mittels eines Elektromotors verschiebbaren Ausschub, einer Steuereinheit zum Ansteuern des Elektromotors und einer elektrisch aktivierbaren Bremseinrichtung. Die Erfindung betrifft auch einen Schiebetritt zur Durchführung des erfindungsgemäßen Verfahrens.

Aus der deutschen Offenlegungsschrift DE 37 08 498 A1 ist eine Steuerung für eine ausfahrbare Eisenbahnwagen-Trittstufe bekannt, bei der ein berührungsloser Reflexsensor vorgesehen ist, um ein Hindernis vor einer Vorderkante der Trittstufe zu erkennen und den Tritt in eine variable, ausgefahrene Endstellung zu verfahren. Als Reflexsensor kann ein pneumatischer Staudrucksensor oder auch ein Ultraschallsensor vorgesehen sein. Bei pneumatischem Antrieb der Trittstufe ist für die Einstellung der variablen, ausgefahrenen Endstellung ein veränderbarer Endanschlag vorgesehen. Bei Verwendung eines Schritt-Elektromotors als Antrieb der Trittstufe können Zwischenstellungen direkt angefahren werden. Zur Verriegelung der ausfahrbaren Trittstufe in beliebig weiter Ausfahrstellung wird bei Verwendung eines Elektromotors für den Antrieb der Trittstufe ein selbsthemmendes Getriebe vorgeschlagen. Bei pneumatischem Antrieb kann eine elektromagnetisch betätigte Sperre verwendet werden, die mit einer Kolbenstange des Pneumatikantriebs in Eingriff tritt.

Aus der britischen Offenlegungsschrift GB 2 223 211 A ist eine ausfahrbare Trittstufe für Eisenbahnwagen bekannt, die Sensoren zum Detektieren einer Spaltbreite zwischen dem Eisenbahnwagen und einem Bahnsteig aufweist. In Abhängigkeit des Abstandes zwischen Eisenbahnwagen und Bahnsteig wird die Trittstufe unterschiedlich weit ausgefahren. Als Sensoren sind optische Abstandssensoren vorgesehen. Eine schaltbare Kupplung im Antriebsstrang der Stufe unterbricht einen Kraftfluss vom Antrieb zur Trittstufe in Abhängigkeit des Sensorsignals. Alternativ kann die Trittstufe mittels eines Hydraulikzylinders verfahren werden, der durch den optischen Abstandssensor gesteuert ist.

Mit der Erfindung soll ein Verfahren zur Steuerung eines Schiebetritts angegeben werden, mit dem eine flexible und sichere Trittstufenpositionierung ermöglicht ist.

Erfindungsgemäß ist hierzu ein Verfahren zur Steuerung eines Schiebetritts, insbesondere für Schienenfahrzeuge, mit einem mittels eines Elektromotors verschiebbaren Ausschub, einer Steuereinheit zum Ansteuern des Elektromotors und einer elektrisch aktivierbaren Bremseinrichtung vorgesehen, bei dem die Steuereinheit bei Vorliegen eines eindeutigen Einfahr- oder Ausfahrbefehls den Ausschub mittels des Elektromotors in eine variable, ausgefahrene Endstellung oder eine vollständig eingefahrene Endstellung verschiebt und bei dem die Steuereinheit die Bremseinrichtung nach Erreichen jeder variablen, ausgefahrenen Endstellung sowie bei Wegfall eines eindeutigen Einfahr- oder Ausfahrbefehls aktiviert.

Mittels der Steuereinheit kann der Schiebetritt an verschiedene Abstände zwischen Eisenbahnwagen und Bahnsteigkante angepasst werden, wobei dadurch, dass die Steuereinheit lediglich bei Vorliegen eines eindeutigen Einfahr- oder Ausfahrbefehls die Trittstufe verfährt, eine hohe Sicherheit gegenüber Fehlfunktionen gegeben ist. Indem die elektrisch aktivierbare Bremseinrichtung nach Erreichen jeder variablen, ausgefahrenen Endstellung aktiviert wird, kann jede beliebige ausgefahrene Endstellung fixiert werden, so dass sich der Schiebetritt auch unter Trittbelastung nicht verschieben kann. Das Vorsehen einer elektrisch aktivierbaren Bremseinrichtung stellt dabei sicher, dass die Fixierung des Schiebetritts in der variablen, ausgefahrenen Endstellung sehr schnell erfolgen kann. Die elektrisch aktivierbare Bremseinrichtung ist dabei unabhängig von irgendwelchen Raststellungen, so dass der Schiebetritt stufenlos verschoben und fixiert werden kann. Eine erhöhte Sicherheit gegenüber Fehlfunktionen ist dadurch gegeben, dass die Bremseinrichtung auch bei Wegfall eines eindeutigen Einfahr- oder Ausfahrbefehls aktiviert wird. Auch bei unklarer Signallage ist dadurch sichergestellt, dass der Schiebetritt nicht durch Trittbelastung oder sonstige Belastungen verschoben werden kann.

In Weiterbildung der Erfindung steuert die Steuereinheit bei einer Behinderung einer Einfahr- oder Ausfahrbewegung vor dem Erreichen einer variablen, ausgefahrenen Endstellung oder vor dem Erreichen der vollständig eingefahrenen Endstellung und bei Vorliegen eines eindeutigen Einfahr- oder Ausfahrbefehls den Elektromotor zu einer Fortsetzung der Einfahr- oder Ausfahrbewegung mit erhöhter Motorleistung an.

Auf diese Weise wird vermieden, dass erhöhte Reibung in einer Führung des Schiebetritts, beispielsweise durch Schmutz oder Eis, zu einem Steckenbleiben des Schiebetritts und damit zu einem Fehler führt, der die Abfahrt eines Zuges verzögern kann. Zweckmäßigerweise ist dabei vorgesehen, dass dann, wenn beim Ausfahren des Schiebetritts ein Hindernis vor der Vorderkante erkannt ist, die Ausfahrbewegung nicht fortgesetzt wird und in ähnlicher Weise beim Erkennen einer Trittbelastung auf dem Schiebetritt die Einfahrbewegung nicht fortgesetzt wird. Dadurch kann sichergestellt werden, dass die Motorleistung beim Ausfahren oder Einfahren nur dann erhöht wird, wenn eine Behinderung der Bewegung durch Reibung, beispielsweise aufgrund von Eis oder Verschmutzung verursacht ist.

In Weiterbildung der Erfindung erhöht die Steuereinheit zu einer Fortsetzung der Einfahr- oder Ausfahrbewegung eine Motorleistung stufenweise.

Beispielsweise kann ein Motorstrom in drei Stufen zu jeweils 10% erhöht werden. Erst wenn nach dem dritten Versuch immer noch keine Fortsetzung der Bewegung möglich ist, wird eine Störungsmeldung ausgegeben. Auf diese Weise lassen sich zahlreiche Störungsmeldungen vermeiden.

In Weiterbildung der Erfindung wird ein Kontakt einer Vorderkante des Ausschubs mit einem Bahnsteig oder Hindernis überwacht und beim Erkennen eines Kontakts der Vorderkante wird eine Bewegungsrichtung beim Ein- oder Ausfahren des Ausschubs für eine vorbestimmte Wegstrecke umgekehrt.

Durch Umkehrung der Bewegungsrichtung wird genügend Freiraum zwischen einem Hindernis, beispielsweise der Bahnsteigkante, und der Vorderkante des Schiebetritts geschaffen, so dass ein Ein- und Ausfedern des Fahrwerks eines Eisenbahnwagens ohne die Gefahr einer Beschädigung des Schiebetritts möglich ist. Eine Hinderniserkennung kann durch zuverlässige und dabei kostengünstige Kontaktsensoren erfolgen, beispielsweise eine Schaltleiste an der Vorderkante des Schiebetritts.

In Weiterbildung der Erfindung wird ein vom Elektromotor aufgenommener Strom anhand wenigstens eines Schwellwerts überwacht und beim Überschreiten des Schwellwerts wird eine Bewegungsrichtung beim Einoder Ausfahren des Ausschubs für eine vorbestimmte Wegstrecke umgekehrt.

Auf diese Weise kann eine Hinderniserkennung ohne Sensoren durch eine Motorstromüberwachung erfolgen. Eine solche Motorstromüberwachung kann beispielsweise auch zusätzlich zur Hinderniserfassung durch einen Sensor eingesetzt werden, um eine Redundanz und somit eine erhöhte Sicherheit bei der Hinderniserkennung zu erhalten. Durch Umkehren der Bewegungsrichtung wird genügend Freiraum zwischen einer Vorderkante des Schiebetritts und einer Bahnsteigkante geschaffen. Nach Umkehrung der Bewegungsrichtung und Erreichen der variablen, ausgefahrenen Endstellung wird die Bremseinrichtung aktiviert, so dass der Schiebetritt in der erreichten Endstellung fixiert ist.

In Weiterbildung der Erfindung erfolgt ausgehend von der vollständig eingefahrenen Endstellung des Ausschubs während einer vorbestimmten Wegstrecke beim Überschreiten des Schwellwerts des Motorstroms keine Umkehr der Bewegungsrichtung des Ausschubs.

Beispielsweise erfolgt während der ersten 10% der maximal möglichen Ausfahrweite keine Umkehr der Bewegungsrichtung des Ausschubs, so dass ein Losbrechen des Ausschubs mit erhöhter Motorleistung und erhöhtem Motormoment erfolgen kann.

In Weiterbildung der Erfindung wird beim Erkennen einer Trittbelastung des Ausschubs während einer Bewegung des Ausschubs diese gestoppt und einen vorbestimmten Zeitraum nach Wegfall der Trittbelastung wieder aufgenommen.

Auf diese Weise wird einerseits die Gefährdung von Personen gemindert, die auch dann noch einsteigen, wenn die Türen bereits nicht mehr freigegeben sind. Andererseits wird dadurch, dass die Bewegung einen vorbestimmten Zeitraum nach Wegfall der Trittbelastung wieder aufgenommen wird, vermieden, dass ein zeitraubender Störungsfall eintritt.

In Weiterbildung der Erfindung wird beim Erkennen einer Trittbelastung während einer Bewegung des Ausschubs diese gestoppt und bei Vorliegen einer Trittbelastung über einen vorbestimmten Zeitraum hinaus wird eine Störungsmeldung ausgegeben.

Auf diese Weise ist sichergestellt, dass bei nicht nur vorübergehender Trittbelastung eine Störungsmeldung ausgegeben wird, beispielsweise dann, wenn ein Fahrgast auf den gerade einfahrenden Schiebetritt aufspringt und dort verharrt.

In Weiterbildung der Erfindung wird beim Vorliegen einer Trittbelastung über einen vorbestimmten Zeitraum hinaus in der ausgefahrenen Endstellung des Ausschubs und bei Vorliegen der Einfahranforderung eine Störungsmeldung ausgegeben.

Auf diese Weise kann beispielsweise eine Türe eines Eisenbahnwagens lokalisiert werden, an der sich Gegenstände oder Personen auf der Trittstufe befinden.

In Weiterbildung der Erfindung wird ein Trittbelastungssignal einer Türsteuerung und/oder einer Personenflusserfassung zugeführt.

Dadurch können im Rahmen der Schiebetrittsteuerung erfasste Signale für weitere Zwecke genutzt werden und somit können Sensoren eingespart werden.

In Weiterbildung der Erfindung erkennt die Steuereinheit einen eindeutigen Einfahrbefehl, wenn ein Einfahrsignal ein erstes logisches Niveau und ein Ausfahrsignal ein zweites logisches Niveau, das von dem ersten logischen Niveau verschieden ist, aufweist, und die Steuereinheit erkennt einen eindeutigen Ausfahrbefehl, wenn ein Ausfahrsignal das erste logische Niveau und ein Einfahrsignal das zweite logische Niveau aufweist.

Dadurch, dass für einen eindeutigen Einfahr- oder Ausfahrbefehl jeweils zwei Signale mit definiertem Signalpegel erforderlich sind, wird die Sicherheit der Schiebetrittsteuerung erhöht. Liegt nämlich kein eindeutiger Einfahr- oder Ausfahrbefehl vor, erfolgt keine Reaktion und der Schiebetritt verharrt in der Stellung, die er gerade einnimmt.

In Weiterbildung der Erfindung wird beim Anlegen eines undefinierten Signalpegels für einen längeren als einen vorbestimmten Zeitraum eine Störungsmeldung ausgegeben.

Auf diese Weise wird eine vorschnelle Störungsmeldung vermieden und dem System noch die Möglichkeit gegeben, einen definierten Signalpegel einzustellen. Erst nach Ablauf einer vorbestimmten Zeitdauer geht das System dann in den Störungszustand.

In Weiterbildung der Erfindung wird eine anliegende Störungsmeldung durch einen Wechsel des logischen Niveaus des Einfahr- und des Ausfahrsignals gelöscht.

Auf diese Weise kann eine anliegende Störungsmeldung in einfacher Weise gelöscht werden, indem ein Einfahr- oder Ausfahrbefehl wiederholt wird. Dadurch kann ein Störungszustand schnell und problemlos und ohne Vorsehen spezieller Steuerungsroutinen überwunden werden. Vorteilhafterweise wird eine aktuelle Stellung des Ausschubs über den integrativen Zusammenhang von Motorstrom, Motorspannung und Drehstellung des Elektromotors berechnet. Unter Berücksichtigung einer Referenzstellung lässt sich dadurch die aktuelle Stellung des Ausschubs ohne aufwendige Sensorik berechnen.

Das der Erfindung zugrundeliegende Problem wird auch durch einen Schiebetritt zur Durchführung des Verfahrens nach einem der vorstehenden Ansprüche und insbesondere für Schienenfahrzeuge gelöst, der einen mittels eines Elektromotors verschiebbaren Ausschub, eine Steuereinheit zum Ansteuern des Elektromotors sowie zum Verarbeiten von Einfahr- und Ausfahrsignalen und eine elektrisch aktivierbare Bremseinrichtung aufweist.

Durch diese Maßnahme ist eine flexible und dennoch sichere Ansteuerung des Schiebetritts in variable ausgefahrene Endstellungen möglich.

In Weiterbildung des erfindungsgemäßen Schiebetritts ist eine elektromagnetisch betätigbare Rasteinrichtung vorgesehen, mittels der der Ausschub in der vollständig eingefahrenen Stellung arretierbar ist, und es sind Mittel vorgesehen, um bei eingesteuerter Rasteinrichtung einen Stromkreis des Elektromotors aufzutrennen.

Durch diese Maßnahmen wird eine sichere Fixierung des Schiebetritts in der eingefahrenen Endstellung erreicht, die sowohl mechanisch, durch Einsteuern der Rasteinrichtung, als auch in elektrischer Hinsicht, durch Auftrennen des Antriebsstromkreises des Elektromotors, erfolgt. Die Einsteuerung der Rasteinrichtung erfolgt dabei zweckmäßigerweise in Abhängigkeit eines Geschwindigkeitssignals und eines Türfreigabesignals.

In Weiterbildung der Erfindung ist wenigstens ein Sicherheitspositionsschalter vorgesehen, der elektromagnetisch verriegelbar ist, wobei das Verriegeln des Sicherheitspositionsschalters den Stromkreis des Elektromotors auftrennt.

Auf diese Weise kann der Schiebetritt in seiner eingefahrenen Endstellung dadurch fixiert werden, dass mittels eines Schalters, der erkennt, dass sich der Schiebetritt in der eingefahrenen Endstellung befindet, ein Antriebsstromkreis des Elektromotors aufgetrennt wird. Zum Ausfahren des Schiebetritts wird dann zunächst der Sicherheitspositionsschalter mittels eines Hubmagneten ausgelöst, so dass der Antriebsstromkreis des Elektromotors wieder geschlossen ist.

In Weiterbildung der Erfindung sind wenigstens ein Überfahr- und wenigstens ein Unterfahrsensor vorgesehen, die ein Überfahren bzw. ein Unterfahren eines Hindernisses durch den Ausschub detektieren.

Auf diese Weise können Hindernisse erkannt werden, die sich nicht unmittelbar vor der Vorderkante des Schiebetritts befinden, beispielsweise dann, wenn eine Bahnsteigkante eine Hinterschneidung aufweist und der Schiebetritt unter die Bahnsteigkante ausfahren würde. Bei einem Ausfedern des Eisenbahnwagens wäre dann eine Beschädigung des Schiebetritts zu befürchten. Dies kann durch das Vorsehen von Unterfahr- bzw. Überfahrsensoren verhindert werden. Als Sensoren können berührungslos arbeitende Sensoren, beispielsweise optische Sensoren oder Ultraschallsensoren, vorgesehen werden.

In Weiterbildung der Erfindung sind als Überfahr- und Unterfahrsensoren durch federbelastete Drehhebel betätigte elektrische Schalter vorgesehen.

Auf diese Weise können Überfahr- und Unterfahrsensoren auf kostengünstige Weise und mit hoher Zuverlässigkeit realisiert werden.

In Weiterbildung der Erfindung weist der Ausschub eine elektrisch Schaltmatte zur Erfassung von Trittbelastungen auf.

Mittels einer Schaltmatte ist eine flächige Erfassung von Trittbelastungen möglich, so dass eine Trittbelastung auch dann sensiert wird, wenn diese lediglich auf einen Randbereich des Schiebetritts einwirkt.

In Weiterbildung der Erfindung beaufschlagt die elektrisch aktivierbare Bremseinrichtung eine Motorwelle des Elektromotors.

Auf diese Weise kann eine Antriebsbewegung des Elektromotors unmittelbar abgestoppt werden, ohne dass Verspannungen im Antrieb des Schiebetritts durch Aktivieren der Bremseinrichtung zu befürchten wären. Auf diese Weise wird ein Verschleiß des Schiebetrittantriebs gering gehalten.

Weitere Merkmale und Vorteile der Erfindung ergeben sich aus den Ansprüchen und der folgenden Beschreibung einer bevorzugten Ausführungsform der Erfindung im Zusammenhang mit den Zeichnungen. In den Zeichnungen zeigen:
- Fig. 1: eine schematische Darstellung eines erfindungsgemäßen Schiebetritts mit dessen elektrischen Komponenten und
- Fig. 2: eine perspektivische Darstellung des erfindungsgemäßen Schiebetritts bei aufgeklapptem Deckel.

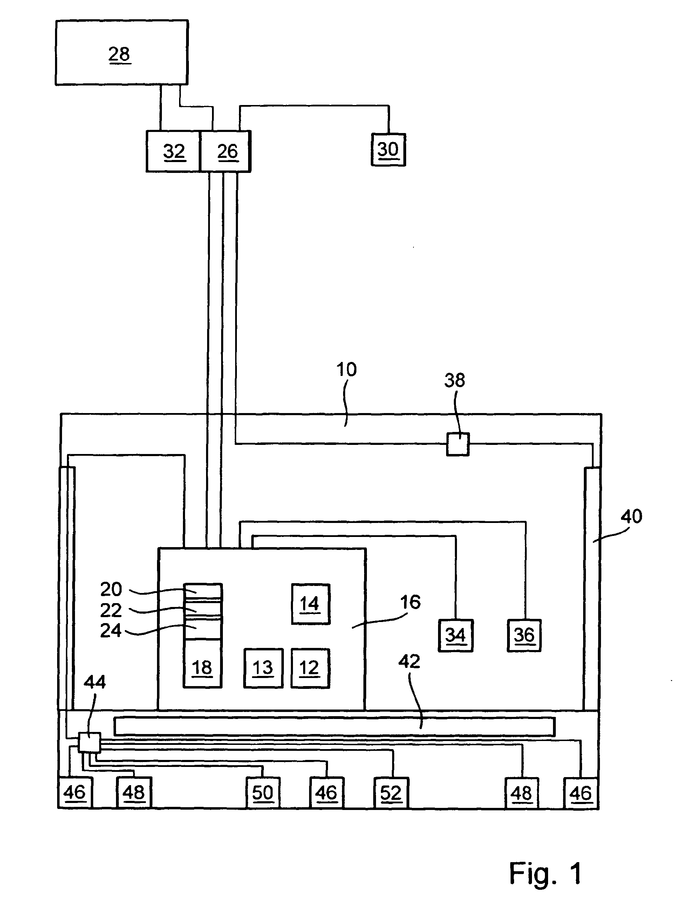

In der Fig. 1 ist schematisch ein Schiebetritt 10 dargestellt, der eine Trittkassette und einen verschiebbar in der Trittkassette gelagerten Ausschub aufweist. Zum Antreiben des Ausschubs ist ein Elektromotor 12 vorgesehen, der mittels einer Steuereinheit oder Trittsteuerung 14 angesteuert wird. Eine Welle des Elektromotors 12 kann mittels einer elektrischen aktivierbaren Bremseinrichtung 13 angehalten und fixiert werden. Der Elektromotor 12 und die Steuereinheit 14 befinden sich innerhalb eines sogenannten Trockenraumes 16, der gegen die Umgebung abgedichtet ist, so dass der Elektromotor 12 und die Trittsteuerung 14 gegen eindringende Feuchtigkeit geschützt sind.

In dem Trockenraum 16 sind weiterhin Anschlussklemmen 18 sowie drei Schütze 20, 22 und 24 angeordnet. Mittels der Schütze 20, 22 und 24 kann in verschiedenen Betriebssituationen beispielsweise ein Stromkreis des Elektromotors 12 aufgetrennt werden, um eine Bewegung des Ausschubs des Schiebetritts 10 zu verhindern. Da die Anschlussklemmen 18 ebenfalls in dem Trockenraum 16 angeordnet sind, sind auch diese gegen Eindringen von Feuchtigkeit und daraus resultierende Kontaktschwierigkeiten geschützt.

Der Schiebetritt 10 ist über Anschlussklemmen 26 elektrisch mit einer Türsteuerung 28 und einem sogenannten Vierkantschalter 30 verbunden. Die Türsteuerung 28 ist weiterhin mit Anschlussklemmen 32 verbunden. Die Türsteuerung 28 ist zur Ansteuerung einer Türe eines Eisenbahnwagens vorgesehen, unter deren Schwelle der erfindungsgemäße Schiebetritt 10 angeordnet ist. Eine Bewegung des Ausschubs des Schiebetritts 10 erfolgt beispielsweise nur dann, wenn die Türsteuerung 28 ein Freigabesignal erteilt hat.

Mittels des Vierkantschalters 30, der einen mittels eines Vierkants betätigbaren elektrischen Schalter darstellt, kann der Schiebetritt 10 außer Betrieb genommen werden.

Der Schiebetritt 10 ist mit zwei Sicherheitspositionsschaltern 34 und 36 ausgerüstet, die erkennen, ob sich der Ausschub des Schiebetritts 10 in seiner vollständig eingefahrenen Endstellung befindet und dann mittels der Schütze 20, 22 und/oder 24 einen Antriebsstromkreis des Elektromotors 12 auftrennen. Die Sicherheitspositionsschalter 34 und 36 werden mittels eines in der Fig. 1 nicht dargestellten Magneten mechanisch verriegelt bzw. betätigt.

Eine Anschlussklemme 38 im Schiebetritt 10 dient zur Verbindung der Anschlussklemmen 26 mit Endschaltern 40 zum Erkennen einer aktuellen Position des Ausschubs des Schiebetritts 10, beispielsweise ob sich der Ausschub 10 bereits in einem Bereich befindet, in dem eine variable, ausgefahrene Endstellung liegen kann oder ob sich der Ausschub noch innerhalb der ersten 10% der Wegstrecke ausgehend von der vollständig eingefahrenen Endstellung befindet. Diese Kenntnis der Stellung des Ausschubs ist für die Ansteuerung des Elektromotors 12 von Bedeutung.

Bei einer bevorzugten Ausführungsform der Erfindung dienen die Endschalter 40 nur zum Erkennen der vollständig eingefahrenen Endstellung und eine ausgefahrene Stellung des Ausschubs 10 wird über Spannung und Strom an den Klemmen des Elektromotors 12 berechnet. Hierzu ist der Elektromotor 12 vorteilhafterweise als permanent erregter Gleichstrommotor ausgeführt und eine Motorsteuerung, beispielsweise innerhalb der Trittsteuerung 14, ermittelt anhand der von ihr gemessenen Daten Motorspannung und Motorstrom die genaue Position des Ausschubs. Über den proportionalen Zusammenhang zwischen der induktiv erzeugten inneren Quellspannung des permanent erregten Gleichstrommotors (EMK) und der Drehzahl des Motors wird integrativ die Position des Ausschubs 10 berechnet. Für eine hinreichende Genauigkeit ist aufgrund des integralen Zusammmenhangs zwischen Position des Ausschubs 10 und Motorspannung und Motorstrom die genaue Kenntnis der vollständig eingefahrenen Stellung des Ausschubs 10 als Referenzpunkt erforderlich. Diese vollständig eingefahrene Referenzstellung wird durch die Endschalter 40 erkannt. Da auf diese Weise nur ein einziger binärer Sensor oder Schalter zur Erfassung der eingefahrenen Endlage nötig ist, um die aktuelle Stellung des Ausschubs 10 mit hoher Genauigkeit zu erfassen, ist eine zusätzliche justier- und wartungsaufwendige Sensorik zur Erfassung der aktuellen Stellung des Ausschubs nicht erforderlich. Neben der aktuellen Stellung des Ausschubs 10 werden auch die Zielpositionen des Ausschubs 10, die beispielsweise von der Steuereinheit 14 als Reaktion auf Kollisionen oder auf Überfahren des Bahnsteigs ermittelt werden, aus der Messung von Motorstrom und Klemmenspannung des Gleichstrommotors 12 berechnet.

Während der ersten 10% der Wegstrecke wird ein Motorstrom des Elektromotors 12 zwar überwacht, um den Ausschub aber bei Vereisung losbrechen zu können, werden bei einer Überschreitung eines Schwellwerts des Motorstroms keine Gegenmaßnahmen getroffen.

Befindet sich der Ausschub bereits in einer Stellung, in der eine variable, ausgefahrene Endstellung liegen kann, wird beim Auftreten eines Hindernisses, beispielsweise detektiert durch eine Schwellwertüberschreitung des Motorstroms, eine variable, ausgefahrene Endstellung angenommen und eine Bremseinrichtung wird aktiviert.

Liegt die aktuelle Stellung des Ausschubs dahingegen noch nicht in einem Bereich, in dem eine variable, ausgefahrene Endstellung liegen kann, so wird bei einer Schwellwertüberschreitung des Motorstroms versucht, die Bewegung des Ausschubs mit erhöhter Motorleistung fortzusetzen. Dies deshalb, da in diesem Fall angenommen wird, dass die Behinderung der Bewegung des Ausschubs durch Reibung in den Führungen des Ausschubs oder durch sonstige Verschmutzung oder Vereisung verursacht ist und kein Hindernis vorliegt, das ein Abstoppen der Bewegung des Ausschubs erforderlich machen würde.

Der Schiebetritt 10 ist im Bereich seiner Trittfläche mit einer Heizung 42 versehen, die sicherstellt, dass die Trittfläche vereisungsfrei bleibt. Die elektrischen Anschlüsse für die Heizung 42 sind in der Fig. 1 nicht dargestellt, die Ansteuerung der Heizung 42 ist aber auch unabhängig von der Ansteuerung des Schiebetritts 10, so dass ein Ausfall der Heizung 42 keine Funktionsstörung des Schiebetritts 10 verursachen kann.

Über eine weitere Anschlussklemme 44 ist die Trittsteuerung 14 mit mehreren Sensoren im Bereich der Vorderkante des Schiebetritts 10 verbunden. Insgesamt drei Unterfahrsensoren 46 detektieren, ob sich oberhalb der Vorderkante des Ausschubs des Schiebetritts 10 ein Hindernis befindet, beispielsweise weil sich eine hinterschnittene Bahnsteigkante oberhalb des Niveaus des Schiebetritts befindet. Zwei Überfahrsensoren 48 detektieren, ob sich unterhalb der Vorderkante des Ausschubs des Schiebetritts 10 ein Hindernis befindet, beispielsweise dann, wenn das Niveau des Schiebetritts oberhalb des Bahnsteigniveaus liegt. Aufgrund der Signale der Unterfahrsensoren 46 und der Überfahrsensoren 48 verhindert die Trittsteuerung 14, dass der Ausschub des Schiebetritts 10 weiter ausgefahren wird. Auf diese Weise wird verhindert, dass auch beim Ein- und Ausfedern des Eisenbahnwagens mit dem Schiebetritt 10 dieser beschädigt wird.

Weiterhin ist der Ausschub des Schiebetritts 10 im Bereich der Trittfläche mit einer Schaltmatte 50 versehen, die eine Trittbelastung der Trittstufe an die Trittsteuerung 14 signalisiert.

Schließlich ist im Bereich der Vorderkante des Ausschubs des Schiebetritts 10 eine sogenannte Druckkante 52 vorgesehen, die einen Kontakt der Vorderkante des Ausschubs mit einem Hindernis an die Trittsteuerung 14 signalisiert.

Im folgenden sollen anhand der schematischen Darstellung der Fig. 1 die grundlegenden Steuerungsfunktionen des Schiebetritts erläutert werden.

Nach dem Einschalten einer Spannungsversorgung für den Schiebetritt 10 verharrt dieser zunächst für 5 Sekunden in seiner jeweiligen Position, wobei in diesem Zustand die Bremse 13 aktiviert wird. Erst danach wird der jeweils anstehende Signalpegel abgearbeitet. Ein Befehl zum Ausfahren des Ausschubs wird dabei umgesetzt, wenn sich der Ausschub in seiner vollständig eingefahrenen Endstellung befindet. Ist dies nach dem Einschalten der Spannungsversorgung des Schiebetritts 10 nicht der Fall, bleibt die Bremseinrichtung 13 aktiviert und die Trittsteuerung 14 gibt ein Signal "Stufe ausgefahren" aus.

Ein Einfahr- bzw. Ausfahrbefehl für den Schiebetritt 10 erfolgt üblicherweise über die Türsteuerung 28, die einen solchen Befehl nur dann ausgibt, wenn ein Geschwindigkeitssignal eine Geschwindigkeit des Eisenbahnwagens von weniger als drei Kilometer pro Stunde anzeigt und darüber hinaus die Türe selbst freigegeben ist, beispielsweise durch einen Zugführer. In diesem Fall liegt ein Türfreigabesignal beispielsweise auf einem logisch hohen Pegel.

Wird der Schiebetritt 10 von der Türsteuerung 28 angefordert, so vollzieht er bei Vorliegen eines eindeutigen Ausfahrbefehls seinen Ausfahrzyklus bis zum Auflaufen auf ein Hindernis. Das Auflaufen auf ein Hindernis wird entweder durch die Druckkante 52 oder eine Motorstromüberwachung festgestellt. Zweckmäßigerweise wird die Motorstromüberwachung parallel zur Hindernisüberwachung durch die Druckkante 52 eingesetzt, um eine redundante Hinderniserkennung zu gewährleisten. Ist ein Hindernis erreicht, wird die Bewegungsrichtung des Elektromotors 12 umgekehrt und die Stufe weicht um etwa 50mm zurück, um dann eine ausgefahrene Endstellung einzunehmen. In dieser variablen, ausgefahrenen Endstellung wird die Bremseinrichtung 13 aktiviert und die Trittsteuerung 14 gibt eine Meldung "Tritt ausgefahren" an die Türsteuerung 28 zurück.

Die Trittsteuerung 14 vollzieht einen Einfahr- bzw. Ausfahrbefehl der Türsteuerung 28 nur dann, wenn ein eindeutiger Einfahr- bzw. Ausfahrbefehl vorliegt. Ein Ausfahrbefehl "Tritt ausfahren" sowie ein Einfahrbefehl "Tritt einfahren" muss dabei statisch anstehen. Ein Einfahrbefehl setzt sich dabei durch ein Ausfahrsignal mit dem logischen Pegel 0 und ein Einfahrsignal mit dem logischen Pegel 1 zusammen, ein Ausfahrbefehl analog durch ein Ausfahrsignal mit dem logischen Pegel 1 und ein Einfahrsignal mit dem logischen Pegel 0. Nur dann, wenn die beschriebenen Signalpegel vorliegen, wird ein Einfahr- oder Ausfahrbefehl abgearbeitet. Bei undefinierten Signalpegel, beispielsweise sowohl Einfahrund Ausfahrsignal auf dem logischen Pegel 0 oder auf dem logischen Pegel 1, erfolgt keine Reaktion der Trittsteuerung 14. Verändern sich die Signalpegel während eines Ein- oder Ausfahrzyklus in der Weise, dass kein eindeutiger Einfahr- oder Ausfahrbefehl mehr vorliegt, wird die Bremseinrichtung 13 bestromt und die Bewegung des Schiebetritts wird angehalten.

Wie ausgeführt wurde, wird die Bremseinrichtung 13 nach Erreichen einer variablen, ausgefahrenen Endstellung aktiviert und die Trittsteuerung 14 gibt eine Meldung "Tritt ausgefahren" an die Türsteuerung 28 zurück. Beim Verlassen einer variablen, ausgefahrenen Endstellung wird die Meldung "Tritt ausgefahren" von der Trittsteuerung 14 zurückgenommen.

Liegt für einen Zeitraum von mehr als einer Sekunde ein undefinierter Signalpegel an, so gibt die Trittsteuerung 14 eine Störungsmeldung an die Türsteuerung 28 aus.

Die Unterfahrschalter 46 sowie die Überfahrschalter 48 sind jeweils aus zwei Sicherheitsschaltern aufgebaut, die als Betätigungselement über einen Feder-Drehhebel verfügen. Beim Ausfahren des Ausschubs des Schiebetritts aus seiner eingefahrenen Endstellung fällt dieser Drehhebel in seine Detektionslage, wodurch ein Signalwechsel vom logischen Pegel 1 auf den logischen Pegel 0 verursacht wird. Beim Überfahren oder Unterfahren eines Bahnsteiges werden der Drehhebel und infolgedessen die Sicherheitsschalter betätigt, wodurch ein Signalwechsel vom logischen Pegel 0 auf den logischen Pegel 1 erfolgt. In der Folge dieses Signalwechsels wird die Bewegung des Ausschubs gestoppt. Es kann dabei vorgesehen sein, die Bewegungsrichtung für eine vorbestimmte Wegstrecke umzukehren, um den Ausschub von dem gerade überfahrenen Hindernis freizuhalten.

Während sich der Ausschub des Schiebetritts 10 bewegt, sowie dann, wenn sich dieser in einer ausgefahrenen, variablen Endstellung befindet, ist die Gewichtsüberwachung mittels der Schaltmatte 50 aktiviert. Bei einer Betätigung der Schaltmatte 50 wird eine Trittbelastungsmeldung oder Gewichtsmeldung ausgegeben. Bewegt sich der Ausschub und tritt gleichzeitig eine Gewichtsmeldung von der Schaltmatte 50 auf, wird die Bewegung des Ausschubs unterbrochen, unabhängig davon, ob es sich um eine Einfahr- oder Ausfahrbewegung handelt. Eine Sekunde, nachdem die Schaltmatte einen Wegfall der Trittbelastung, gekennzeichnet durch Wegfall der Gewichtsmeldung, signalisiert hat, setzt der Ausschub seine Einfahr- oder Ausfahrbewegung fort. Liegt eine Gewichtsmeldung der Schaltmatte 50 dahingegen während einer Bewegung des Ausschubs für mehr als 5 Sekunden an, geht die Trittsteuerung 14 in einen Störungszustand und ein entsprechendes Störsignal wird gesetzt.

Befindet sich der Ausschub des Schiebetritts 10 in einer variablen, ausgefahrenen Endstellung und liegt gleichzeitig ein eindeutiger Einfahrbefehl an, so geht die Trittsteuerung 14 ebenfalls dann in Störung, wenn mehr als 5 Sekunden ein Gewichtsmeldungssignal der Schaltmatte 50 anliegt.

Neben der Türsteuerung 14 wird das Gewichtsmeldungssignal der Schaltmatte 50 auch der Türsteuerung 28 sowie gegebenenfalls weiteren Steuereinheiten zur Verfügung gestellt, beispielsweise um bei geöffneter Tür einen Personenflusserfassung durchzuführen und/oder um eine Türbewegung bei auftretender Gewichtsmeldung anzuhalten.

Mittels des Vierkantschalters 30 kann der Schiebetritt 10 außer Betrieb genommen werden. Der elektrische Vierkantschalter 30 arbeitet in Kombination mit einem der Sicherheitspositionsschalter 34 und 36. Bei Betätigung des Vierkantschalters wird über eine Ruhekontakt der Stromkreis des Elektromotors 12 mittels des Schützes 24 elektrisch aufgetrennt. Die Trittsteuerung 14 sowie die Türsteuerung 28 erhalten ein Signal "Tritt elektrisch abgesperrt". Dieses Signal sorgt bei der Trittsteuerung 14 sowie der Türsteuerung 28 für die Unterdrückung eventuell aus der Auftrennung des Motorstromkreises resultierender Folgefehler. Der Schütz 24 unterbricht darüber hinaus die Ansteuerung des Entriegelungsmagneten für den Sicherheitspositionsschalter 34 oder 36. Das bei der Betätigung des Vierkantschalters 30 ausgegebene Signal wird mit einer logischen UND-Verknüpfung mit der Meldung des Sicherheitspositionsschalters 36 "Tritt eingefahren und verriegelt" sowie der Meldung beim Auftrennen des Schützes 24 "Tritt elektrisch abgesperrt" verknüpft. Ist der Ausgang dieser logischen UND-Verknüpfung wahr, wird eine Grünschleifenmeldung "Tritt eingefahren" überbrückt.

Durch das Absperren mittels des Vierkantschalters 30 werden Störungsmeldungen zurückgesetzt und Folgefehler werden unterdrückt. Wird der Schiebetritt 10 mittels des Vierkantschalters 30 wieder in Betrieb genommen, wird der Schütz 24 wieder bestromt, so dass auch der Stromkreis des Elektromotors 12 wieder geschlossen ist. Gleichzeitig wird der Sicherheitspositionsschalter 34 mittels des Hubmagneten entriegelt und nach einer Wartezeit von zwei Sekunden wird der anstehende Befehl, beispielsweise ein Ausfahrbefehl, abgearbeitet.

Wie bereits ausgeführt wurde, weisen die beiden Sicherheitspositionsschalter 34 und 36 eine mechanische Zuhaltung auf. Die Sicherheitspositionsschalter 34 und 36 werden von der Türsteuerung 28 oder auch von einer Fahrzeugsteuerung magnetisch entriegelt, wenn ein Geschwindigkeitssignal eine Geschwindigkeit von weniger als drei Kilometer pro Stunde anzeigt und eine zugeordnete Türe freigegeben ist. Dieser Entriegelungspfad ist dann, wenn der Schiebetritt 10 mittels des Vierkantschalters 30 außer Betrieb genommen ist, durch einen Schützkontakt unterbrochen. Die Sicherheitspositionsschalter verfügen über je zwei zwangsöffnende Kontakte. Diese Kontakte sind immer dann geöffnet, wenn sich der zugehörige Riegel nicht in eingefahrener Position befindet und/oder der Entriegelungsmagnet angesteuert wird.

Die Sicherheitspositionsschalter 34 und 36 verfügen über einen weiteren Meldekontakt, der das Ein- bzw. Ausfahren des Riegels anzeigt. Dabei werden die Schaltkontakte "über Kreuz" an die auswertenden Einheiten gemeldet. Beispielsweise meldet der Sicherheitspositionsschalter 34 der Türsteuerung 28 "Tritt eingefahren/verriegelt" und der Sicherheitspositionsschalter 36 meldet "Tritt eingefahren". Der Sicherheitspositionsschalter 34 gibt die Grünschleifenmeldung an die Fahrzeugsteuerung weiter und der Sicherheitspositionsschalter 36 ist für die Überbrückung bei einer Außerbetriebnahme des Schiebetritts verantwortlich, wie zuvor geschildert wurde.

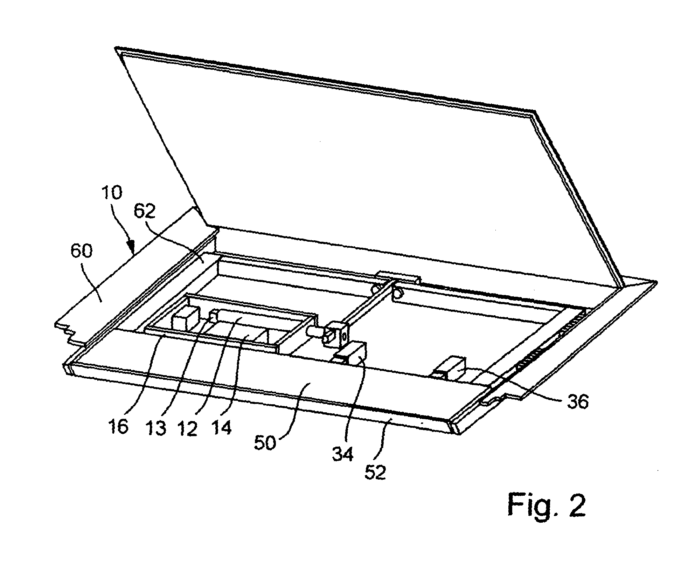

Die Darstellung der Fig. 2 zeigt eine perspektivische Darstellung des Schiebetritts 10. In einer Trittkassette 60 ist ein Ausschub 62 verschiebbar aufgenommen, und der Ausschub 62 wird mittels des Elektromotors 12, der im Trockenraum 16 angeordnet ist, bewegt. Wie ausgeführt wurde, sind in dem Trockenraum 16 darüber hinaus die Trittsteuerung 14 sowie die in der Fig. 2 nicht näher bezifferten Schütze und Anschlussklemmen untergebracht. Weiterhin ist in dem Trockenraum die auf die Motorwelle wirkende Bremseinrichtung 13 angeordnet.

Der Ausschub 62 ist an seiner Vorderkante mit der Druckkante 52 versehen und die Trittfläche des Ausschubs 62 ist mit der Schaltmatte 50 belegt, über die eine Trittbelastung erfasst wird. Die beiden Sicherheitspositionsschalter 34 und 36 sind auf einem Boden der Trittkassette 60 angeordnet und liegen innerhalb einer zentralen Ausnehmung des Ausschubs 60, der allgemein die Form eines rechteckigen Tragrahmens aufweist. Die Sicherheitspositionsschalter 34 und 36 werden in der vollständig eingefahrenen Stellung des Ausschubs 62 von einer Hinterkante einer Trittfläche des Ausschubs 62 berührt und ausgelöst.

Für die Ausgabe einer Störungsmeldung durch die Trittsteuerung 14 sind mehrere, definierte Fälle vorgesehen.

Zunächst setzt die Trittsteuerung 14 einen Störungsausgang, wenn während des Ausfahrens des Schiebetritts 10 die Schaltmatte 50 für mehr als 5 Sekunden eine Gewichtsmeldung abgibt. Eine Rücknahme dieser Störungsmeldung oder dieses Fehlers wird durch eine Rücknahme und Neuerteilung des Ausfahrbefehls erreicht.

In analoger Weise wird der Störungsausgang von der Trittsteuerung 14 gesetzt, wenn während des Einfahrens für mehr als 5 Sekunden eine Gewichtsmeldung von der Schaltmatte 50 vorliegt. Auch in diesem Fall wird die Störung durch Rücknahme und Neuerteilung des Einfahrbefehls zurückgenommen.

Weiterhin wird der Störungsausgang gesetzt, wenn bei ausgefahrenem Tritt und beim Vorliegen des Befehls "Tritt einfahren" für mehr als 5 Sekunden eine Gewichtsmeldung von der Schaltmatte 50 vorliegt. In diesem Fall erfolgt die Fehler- oder Störungsrücknahme durch Rücknahme und Neuerteilung des Einfahrbefehls.

Wird die Bewegung des Ausschubs während des Einfahrens behindert, bevor die vollständig eingefahrene Endstellung erreicht ist, wird, wie zuvor beschrieben wurde, versucht, durch dreimalige Erhöhung des Motorstroms die Behinderung zu überwinden und den Schiebetritt 10 in die vollständig eingefahrene Endstellung zu bringen. Sind diese drei Versuche nicht erfolgreich, so wird dies dadurch detektiert, dass der Elektromotor 12 aufgrund der Motorstromüberwachung noch vor Erreichen der vollständig eingefahrenen Endstellung dreimal seine Bewegungsrichtung umkehrt. In diesem Fall setzt die Trittsteuerung 14 den Störungsausgang. Diese Störungsmeldung kann durch Rücknahme und Neuerteilung des Einfahrbefehls zurückgenommen werden.

Wie ebenfalls bereits erläutert wurde, setzt die Trittsteuerung 14 den Störungsausgang, wenn für ein Zeitraum von mehr als einer Sekunde ein nicht plausibler Signalpegel des Einfahrsignals oder des Ausfahrsignals anliegt. Eine Fehlerrücknahme erfolgt in diesem Fall automatisch bei eindeutigem Signalpegel. Bei einer Unterspannung der Versorgungsspannung wird ebenfalls eine Fehlermeldung ausgegeben, wobei nach 30 Sekunden eine automatische Fehlerrücknahme stattfindet.

Überspannungs- und Überstromfehler können nur durch eine Reset der Steuerung, entsprechend einem spannungslosen Zustand der Steuerung, zurückgesetzt werden.

## Patentansprüche

1. Verfahren zur Steuerung eines Schiebetritts (10), insbesondere für Schienenfahrzeuge, mit einem mittels eines Elektromotors (12) verschiebbaren Ausschub (62), einer Steuereinheit (14) zum Ansteuern des Elektromotors (12), **dadurch gekennzeichnet, dass** die Steuereinheit (14) bei Vorliegen eines eindeutigen Einfahr- oder Ausfahrbefehls den Ausschub (62) mittels des Elektromotors (12) in eine variable, ausgefahrene Endstellung oder eine vollständig eingefahrene Endstellung verschiebt und dass die Steuereinheit (14) eine elektrisch aktivierbare Bremseinrichtung (13) nach Erreichen jeder variablen, ausgefahrenen Endstellung sowie bei Wegfall eines eindeutigen Einfahr- oder Ausfahrbefehls aktiviert.

2. Verfahren nach Anspruch 1, **dadurch gekennzeichnet, dass** bei einer Behinderung einer Einfahr- oder Ausfahrbewegung vor dem Erreichen einer variablen ausgefahrenen Endstellung oder der vollständig eingefahrenen Endstellung und bei Vorliegen eines eindeutigen Einfahr- oder Ausfahrbefehls die Steuereinheit (14) den Elektromotor (12) zu einer Fortsetzung der Einfahr- oder Ausfahrbewegung mit erhöhter Motorleistung ansteuert.

3. Verfahren nach Anspruch 2, **dadurch gekennzeichnet, dass** die Steuereinheit (14) zu einer Fortsetzung der Einfahr- oder Ausfahrbewegung eine Motorleistung stufenweise erhöht.

4. Verfahren nach einem der vorstehenden Ansprüche, **dadurch gekennzeichnet, dass** ein Kontakt einer Vorderkante des Ausschubs (62) mit einem Bahnsteig oder Hindernis überwacht wird und beim Erkennen eines Kontakts der Vorderkante eine Bewegungsrichtung beim Ein- oder Ausfahren des Ausschubs (62) für eine vorbestimmte Wegstrecke umgekehrt wird.

5. Verfahren nach einem der vorstehenden Ansprüche, **dadurch gekennzeichnet, dass** ein vom Elektromotor (12) aufgenommener Strom anhand wenigstens eines Schwellwerts überwacht wird und beim Überschreiten des Schwellwerts eine Bewegungsrichtung beim Ein- oder Ausfahren des Ausschubs (62) für eine vorbestimmte Wegstrecke umgekehrt wird.

6. Verfahren nach Anspruch 5, **dadurch gekennzeichnet, dass** ausgehend von der vollständig eingefahrenen Endstellung des Ausschubs (62) während einer vorbestimmten Wegstrecke beim Überschreiten des Schwellwerts des Motorstroms keine Umkehr der Bewegungsrichtung des Ausschubs (62) erfolgt.

7. Verfahren nach einem der vorstehenden Ansprüche, **dadurch gekennzeichnet, dass** beim Erkennen einer Trittbelastung des Ausschubs (62) während einer Bewegung des Ausschubs (62) diese gestoppt wird und einen vorbestimmten Zeitraum nach Wegfall der Trittbelastung wieder aufgenommen wird.

8. Verfahren nach Anspruch 7, **dadurch gekennzeichnet, dass** beim Erkennen einer Trittbelastung während einer Bewegung des Ausschubs (62) diese gestoppt wird und bei Vorliegen einer Trittbelastung über einen vorbestimmten Zeitraum hinaus eine Störungsmeldung ausgegeben wird.

9. Verfahren nach Anspruch 7 oder 8, **dadurch gekennzeichnet, dass** beim Vorliegen einer Trittbelastung über einen vorbestimmten Zeitraum hinaus in der ausgefahrenen Endstellung des Ausschubs (62) und bei vorliegender Einfahranforderung eine Störungsmeldung ausgegeben wird.

10. Verfahren nach einem der vorstehenden Ansprüche, **dadurch gekennzeichnet, dass** ein Trittbelastungssignal einer Türsteuerung (28) und/oder einer Personenflusserfassung zugeführt wird.

11. Verfahren nach einem der vorstehenden Ansprüche, **dadurch gekennzeichnet, dass** die Steuereinheit (14) einen eindeutigen Einfahrbefehl erkennt, wenn ein Einfahrsignal ein erstes logisches Niveau und ein Ausfahrsignal ein zweites logisches Niveau, das von dem ersten logischen Niveau verschieden ist, aufweist und die Steuereinheit (14) einen eindeutigen Ausfahrbefehl erkennt, wenn ein Ausfahrsignal das erste logische Niveau und ein Einfahrsignal das zweite logische Niveau aufweist.

12. Verfahren nach Anspruch 11, **dadurch gekennzeichnet, dass** beim Anliegen eines undefinierten Signalpegels für einen längeren als einen vorbestimmten Zeitraum eine Störungsmeldung ausgegeben wird.

13. Verfahren nach einem der vorstehenden Ansprüche, **dadurch gekennzeichnet, dass** eine anliegende Störungsmeldung durch einen Wechsel des logischen Niveaus des Einfahr- und des Ausfahrsignals gelöscht wird.

14. Verfahren nach einem der vorstehenden Ansprüche, **dadurch gekennzeichnet, dass** die Steuereinheit (14) eine aktuelle Stellung des Ausschubs (62) mittels einer integrativen Berücksichtigung von Motorstrom und Motorspannung des Elektromotors (12) und einer Referenzstellung des Elektromotors (12) berechnet.

15. Schiebetritt zur Durchführung des Verfahrens nach einem der vorstehenden Ansprüche und insbesondere für Schienenfahrzeuge, mit einem mittels eines Elektromotors (12) verschiebbaren Ausschub (62), einer Steuereinheit (14) zum Ansteuern des Elektromotors (12) sowie zum Verarbeiten von Einfahr- und Ausfahrsignalen und einer elektrisch aktivierbaren Bremseinrichtung (13).

16. Schiebetritt nach Anspruch 15, **dadurch gekennzeichnet, dass** eine elektromagnetisch betätigbare Rasteinrichtung vorgesehen ist, mittels der der Ausschub in der vollständig eingefahrenen Stellung arretierbar ist, und dass Mittel (30, 24) vorgesehen sind, um bei eingesteuerter Rasteinrichtung einen Stromkreis des Elektromotors aufzutrennen.

17. Schiebetritt nach Anspruch 16, **dadurch gekennzeichnet, dass** wenigstens ein Sicherheitspositionsschalter (34, 36) vorgesehen ist, der elektromagnetisch verriegelbar ist, wobei das Verriegeln des Sicherheitspositionsschalters (34, 36) den Stromkreis des Elektromotors (12) auftrennt.

18. Schiebetritt nach Anspruch 16 oder 17, **dadurch gekennzeichnet, dass** wenigstens ein Überfahr- und/oder wenigstens ein Unterfahrsensor (46, 48) vorgesehen sind, die ein Überfahren beziehungsweise ein Unterfahren eines Hindernisses durch den Ausschub (62) detektieren.

19. Schiebetritt nach Anspruch 18, **dadurch gekennzeichnet, dass** als Überfahr- und Unterfahrsensoren (46, 48) durch federbelastete Drehhebel betätigte elektrische Schalter vorgesehen sind.

20. Schiebetritt nach einem der vorstehenden Ansprüche 15 bis 19, **dadurch gekennzeichnet, dass** der Ausschub (62) eine elektrische Schaltmatte (50) zur Erfassung von Trittbelastungen aufweist.

21. Schiebetritt nach einem der vorstehenden Ansprüche 15 bis 20, **dadurch gekennzeichnet, dass** die elektrisch aktivierbare Bremseinrichtung (13) eine Motorwelle des Elektromotors (12) beaufschlagt.

22. Schiebetritt nach einem der vorstehenden Ansprüche 15 bis 21 mit Mitteln (40) zum Erkennen einer Referenzstellung des Ausschubs (62), **dadurch gekennzeichnet, dass** die Steuereinheit (14) Mittel zum Berechnen einer aktuellen Stellung des Ausschubs (62) durch integrative Berücksichtigung von Motorstrom und Motorspannung und der Referenzstellung aufweist.

23. Schiebetritt nach Anspruch 22, **dadurch gekennzeichnet, dass** der Elektromotor (12) als permanent erregter Gleichstrommotor ausgebildet ist.

## Claims

1. A process for controlling an extendable footstep (10), particularly for rail vehicles, with an extraction slider (62) extendable by means of an electric motor (12), a control unit (14) for actuating the electric motor (12), **characterised in that** the control unit (14), when a definite command to retract or extract is present, slides the extraction slider (62) by means of the electric motor (12) into a variable, extracted final position or a fully retracted final position and that the control unit (14) activates an electrically activatable brake device (13) after reaching any variable, extraction final position and in case a definite retraction or extraction command fails.

2. A process according to Claim 1, **characterised in that** in case of obstruction of retraction or extraction motion prior to reaching any variable final position of extraction or of full final position of retraction and when a definite retraction or extraction command is present, the control unit (14) activates the electric motor (12) to continue the retraction or extraction motion with increased motor power.

3. A process according to Claim 2 **characterised in that** the control unit (14) increases the motor power gradually to continue the retraction or extraction motion.

4. A process according to one of the preceding claims **characterised in that** a contact between the front edge of the extraction slider (62) and a railway platform or obstruction of said front edge is monitored and upon detection of a contact with the front edge, a motion direction is reversed for a predetermined distance when retracting or extracting the slider (62).

5. A process according to one of the preceding claims **characterised in that** the electric current consumed by the electric motor (12) is monitored based on at least a threshold value and upon exceeding the threshold value a motion direction is reversed for a predetermined distance when retracting or extracting the slider (62).

6. A process according to Claim 5, **characterised in that**, starting from the fully retracted final position of the extraction slider (62) during a predetermined distance upon exceeding the threshold value of motor current, no reverse of motion direction of the extraction slider (62) occurs.

7. A process according to one of the preceding claims, **characterised in that**, upon detecting a treading load on the extraction slider (62) during a motion of the extraction slider (62), said extraction slider motion is stopped and resumed after a predetermined period of time after the treading load has been removed.

8. A process according to Claim 7 **characterised in that**, upon detecting a treading load during the motion of the extraction slider (62), said extraction slider motion is stopped and if the presence of the treading load persist beyond a predetermined period of time a trouble signal is issued.

9. A process according to Claim 7 or 8, **characterised in that**, upon the presence of a treading load beyond a predetermined period in the final position of extraction of the slider (62) and upon the presence of a retract request, a trouble signal is issued.

10. A process according to one of the preceding claims **characterised in that** a treading load signal is fed to a door control (28) and/or to a passenger flow detector.

11. A process according to one of the preceding claims, **characterised in that** the control unit (14) recognizes a definite retraction command when a retraction signal features a first logic level and an extraction signal features a second logic level that is different from the first logic level and the control unit (14) recognizes a definite extraction command when an extraction signal features the first logic level and a retraction signal features the second logic level.

12. A process according to Claim 11 **characterised in that** on applying an undefined signal level for a period longer than a predetermined period of time a trouble signal is issued.

13. A process according to one of the preceding claims **characterised in that** a present trouble signal is deleted by changing the logic level of the retraction and extraction signal.

14. A process according to one of the preceding claims **characterised in that** the control unit (14) calculates a current position of the extraction slider (62) by means of an integrative consideration of motor current and motor voltage of electric motor (12) and a reference position of said electric motor (12).

15. An extendable footstep for executing the process according to one of the preceding claims, and particularly for rail vehicles, with an extraction slider (62) extendable by means of an electric motor (12), a control unit (14) for actuating said electric motor (12) and for processing retraction and extraction signals and an electrically activatable brake device (13).

16. An extendable footstep according to Claim 15, **characterised in that** an electromagnetically activatable detent mechanism is provided by means of which the extraction slider can be locked in the fully retracted position and by the means (30, 24) in order to disconnect a current circuit of the electric motor in the case of an activated detent mechanism.

17. An extendable footstep according to Claim 16, **characterised in that** at least a safety position switch (34, 36) is provided, which is electromagnetically lockable, whereby locking the safety position switch (34, 36) disconnects the current circuit of the electric motor (12).

18. An extendable footstep according to Claim 16 or 17, **characterised in that** at least a run-over and/or at least a run-under sensor (46, 48) are/is provided, which detect/s an obstacle when the extraction slider (62) runs over or under it.

19. An extendable footstep according to Claim 18 **characterised in that** electric switches are provided and actuated by means of springloaded rotary levers as sensors (46, 48) that detect running over or under.

20. An extendable footstep according to one of the preceding Claims 15 to 19 **characterised in that** the extraction slider (62) features an electric switching mat (50) for recording treading loads.

21. An extendable footstep according to one of the preceding Claims 15 to 20 **characterised in that** the electrically activatable brake device (13) acts on a shaft of the electric motor (12).

22. An extendable footstep according to one of the preceding Claims 15 to 21 (40) for detecting a reference position of the extraction slider (62), **characterised in that** the control unit (14) features means for calculating a current position of the extraction slider (62) via integrative consideration of motor current and voltage and the reference position.

23. An extendable footstep according to Claim 22 **characterised in that** the electric motor (12) is formed as a permanently excited direct current motor.

## Revendications

1. Procédé pour actionner un marchepied (10), notamment pour véhicules ferroviaires, avec un tiroir mobile (62) déplaçable par un moteur électrique (12), avec une unité de commande (14) servant à exciter le moteur électrique (12), **caractérisé en ce que** l'unité de commande (14) - en présence d'un ordre clair d'escamotage ou de déploiement - amène au moyen du moteur électrique (12) le tiroir mobile (62) sur une position finale variable entièrement sortie, ou sur une position finale entièrement escamotée, et **en ce que** l'unité de commande (14) active un équipement de freinage (13), activable électriquement, après avoir atteint toute position finale variable entièrement sortie ainsi qu'en cas de disparition d'un ordre clair d'escamotage ou de déploiement.

2. Procédé selon la revendication 1, **caractérisé en ce que** si le mouvement d'escamotage ou de déploiement rencontre un obstacle avant d'avoir atteint une position finale variable entièrement sortie ou une position finale entièrement escamotée et s'il y a présence d'un signal clair d'escamotage ou de déploiement, l'unité de commande (14) excite le moteur électrique (12) pour qu'il poursuive le mouvement d'escamotage ou de déploiement avec une puissance moteur accrue.

3. Procédé selon la revendication 2, **caractérisé en ce que** l'unité de commande (14) accroît par gradins une puissance moteur pour pouvoir poursuivre le mouvement d'escamotage ou de déploiement.

4. Procédé selon l'une des revendications précédentes, **caractérisé en ce que** le bord avant du tiroir mobile (62) fait l'objet d'une surveillance en contact éventuel avec un quai ou un obstacle et que, si un tel contact du bord avant est détecté, une inversion du sens du mouvement a lieu, sur une distance définie d'avance, pendant l'escamotage ou le déploiement du tiroir mobile (62).

5. Procédé selon l'une des revendications précédentes, **caractérisé en ce qu'**une consommation de courant par le moteur électrique (12) est surveillée à l'aide d'au moins une valeur seuil, et que lorsqu'un dépassement de cette valeur se produit, une inversion du sens du mouvement a lieu, sur une distance définie d'avance, pendant l'escamotage ou le déploiement du tiroir mobile (62).

6. Procédé selon la revendication 5, **caractérisé en ce que**, si l'intensité moteur dépasse une valeur seuil lorsque le tiroir mobile (62) quitte sa position entièrement escamotée et franchit une distance prédéfinie, l'inversion du sens du mouvement du tiroir mobile (62) n'a pas lieu.

7. Procédé selon l'une des revendications précédentes, **caractérisé en ce que** la détection d'une contrainte appliquée sur le marchepied pendant que le tiroir mobile (62) se déplace stoppe ce mouvement et en que ce dernier reprend au bout d'un temps d'attente prédéfini consécutif à la disparition de la contrainte sur le marchepied.

8. Procédé selon la revendication 7, **caractérisé en ce que** la détection d'une contrainte appliquée sur le marchepied pendant que le tiroir mobile (62) se déplace stoppe ce mouvement et en que ce si la contrainte sur le marchepied persiste au-delà d'un temps prédéfini, l'émission d'un message de dérangement a lieu.

9. Procédé selon la revendication 7 ou 8, **caractérisé en ce que** la présence - pendant un temps supérieur à celui prédéfini, d'une contrainte sur le marchepied tandis que le tiroir mobile (62) se trouve en position finale déployée - et la présence d'une demande d'escamotage provoquent l'émission d'un message de dérangement.

10. Procédé selon l'une des revendications précédentes, **caractérisé en ce que** un signal indiquant la présence d'une contrainte sur le marchepied est envoyé à une commande (28) de porte et/ou à un système de saisie des flux de personnes.

11. Procédé selon l'une des revendications précédentes, **caractérisé en ce que** l'unité de commande (14) détecte un ordre d'escamotage clair lorsqu'un signal d'escamotage présente un premier niveau logique et qu'un signal de déploiement présente un deuxième niveau logique différent du premier niveau logique, et **en ce que** l'unité de commande (14) détecte un ordre de déploiement clair lorsqu'un signal de déploiement présente le premier niveau logique et un signal d'escamotage présente le deuxième niveau logique.

12. Procédé selon la revendication 11, **caractérisé en ce qu'**en présence d'un niveau indéfini de signal pendant un temps supérieur à un temps prédéfini, l'émission d'un message de dérangement a lieu.

13. Procédé selon l'une des revendications précédentes, **caractérisé en ce qu'**un changement de niveau logique du signal d'escamotage et du signal de déploiement efface un message de dérangement présent.

14. Procédé selon l'une des revendications précédentes, **caractérisé en ce que** l'unité de commande (14) calcule une position actuelle du tiroir mobile (62) en intégrant dans le calcul le courant et la tension du moteur électrique (12) ainsi qu'une position de référence du moteur électrique (12).

15. Marchepied permettant de réaliser le procédé selon l'une des revendications précédentes, et notamment pour véhicules ferroviaires, comprenant un tiroir mobile (62) déplaçable au moyen d'un moteur électrique (12), une unité de commande (14) pour exciter le moteur électrique (12) et pour traiter les signaux d'escamotage et de déploiement, et un équipement de freinage activable électriquement.

16. Marchepied selon la revendication 15, **caractérisé en ce qu'**un équipement de crantage actionnable électromagnétiquement a été prévu, permettant de retenir le tiroir en position complètement escamotée, et **en ce que** des moyens (30, 24) ont été prévus pour ouvrir un circuit électrique du moteur électrique lorsque l'équipement de crantage entre dans le circuit de commande.

17. Marchepied selon la revendication 16, **caractérisé en ce qu'**au moins un capteur de position de sécurité (34, 36) a été prévu, verrouillable électromagnétiquement, le verrouillage de ce capteur de position de sécurité (34, 36) ouvrant le circuit électrique du moteur électrique.

18. Marchepied selon la revendication 16 ou 17, **caractérisé en ce qu'**au moins un détecteur de passage par-dessus et/ou au moins un détecteur de passage par dessous (46, 48) ont été prévus, qui détectent le passage du tiroir mobile (62) au-dessus et/ou en dessous d'un obstacle.

19. Marchepied selon la revendication 18, **caractérisé en ce qu'**ont été prévus, comme détecteurs de passage au-dessus et en dessous (46, 48), des capteurs électriques actionnés par des leviers rotatifs sous contrainte ressort.

20. Marchepied selon l'une des revendications 15 à 19, **caractérisé en ce que** le tiroir mobile (62) présente un tapis commutateur (50) électrique servant à saisir les contraintes appliquées sur le marchepied.

21. Marchepied selon l'une des revendications précédentes 15 à 20, **caractérisé en ce que** l'équipement de freinage (13) activable électriquement agit sur un arbre du moteur électrique (12).

22. Marchepied selon l'une des revendications précédentes 15 à 21, avec des moyens (40) permettant de détecter une position de référence du tiroir mobile (62), **caractérisé en ce que** l'unité de commande (14) présente des moyens permettant de calculer une position actuelle du tiroir mobile (62), en intégrant dans le calcul le courant et la tension du moteur, et la position de référence.

23. Marchepied selon la revendication 22, **caractérisé en ce que** le moteur électrique (12) est configuré en moteur sous excitation permanente alimenté en courant continu.
